(19) Europäisches Patentamt
European Patent Office
Office européen des brevets

(11) **EP 2 325 723 A2**

(12) **EUROPEAN PATENT APPLICATION**

(43) Date of publication:
**25.05.2011 Bulletin 2011/21**

(51) Int Cl.:
***G06F 3/01*** (2006.01)

(21) Application number: **10191540.3**

(22) Date of filing: **17.11.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **18.11.2009 JP 2009263329**<br>**02.08.2010 JP 2010173690**<br><br>(71) Applicant: **Ricoh Company, Ltd**<br>**Ohta-ku**<br>**Tokyo 143 (JP)** | (72) Inventors:<br>• **Harashima, Seigo**<br>**Tokyo 143-8555 (JP)**<br>• **Takada, Masato**<br>**Tokyo 143-8555 (JP)**<br>• **Nakamura, Mayumi**<br>**Tokyo 143-8555 (JP)**<br><br>(74) Representative: **Schwabe - Sandmair - Marx**<br>**Patentanwälte**<br>**Stuntzstraße 16**<br>**81677 München (DE)** |

(54) **Touch panel device, touch panel device control method, and storage medium**

(57)    A touch panel device includes an operation panel, an image display unit, a control generator, a vibrator, and a controller. The operation panel receives an operation input upon contact of a surface of the operation panel by a manipulator. The image display unit, disposed facing the operation panel, displays an image. The control generator generates an image of a control displayable on the image display unit. The vibrator vibrates the operation panel when a control is operated by the manipulator contacting a position on the operation panel corresponding to a position of the image of the control displayed on the image displays unit. The controller causes the vibrator to provide a tactile sensation using vibration, corresponding to a shape of the control at a contact position between the manipulator and the control on the operation panel as the manipulator moves on the operation panel to move the control in the image display unit.

FIG. 1

**Description**

BACKGROUND OF THE INVENTION

Field of the Invention

The present invention relates to a touch panel device to display controls on an image display unit, and to receive input from a control panel, and a control method for the touch panel device.

Description of the Background Art

Display screens of terminal devices such as cell phones, music players, or the like include an input device (hereinafter, touch panel or touch panel device). Generally, a touch panel device is composed of a display screen such as a liquid crystal screen and an operation panel superimposed on the display screen.

In such touch panel devices, controls such as buttons or the like are displayed at given display positions on a display screen, and can be operated by touching the displayed positions of controls on a control panel with a finger, which may be used as a manipulator. Such controls (e.g., buttons) may be displayed as graphical user interface (GUI) parts. Unlike control panels provided with mechanical interfaces such as mechanical buttons, sliders, dials, or the like, such touch panel devices allow the layout of the controls to be changed at will using software programs, thereby enhancing user convenience and user friendliness. Demand for such touch panel devices is expected to grow.

However, when controls displayed on a display screen are to be operated, a fingertip may block the controls from view of user, which might cause some stress to an user. Further, compared to operating mechanical buttons that have actual shapes (e.g., concave or convex) and/or which makes sounds such as clicks or the like, users (or operators) that operate the controls displayed on a display screen may not get an actual tactile and/or auditory sensation. Accordingly, it may be difficult for the user to confirm whether inputting, such as pushing and/or sliding, is accurately recognized by the touch panel device, and discrepancies may occur between what the user intends and what the device does. For example, when an user finger is slidably moved on a control panel to operate a slider (i.e., GUI part), or when an user finger is rotated circularly on a control panel to operate a dial (i.e., GUI part), such GUI parts may not correctly track a movement of the finger, by which operation of GUI parts may fail. In such cases, users think that GUI parts are operated as users intended to operate but GUI parts do not actually respond such intention, by which users may feel some stress.

As one approach, in the case of a touch panel device described in JP-2009-217816-A, when a finger is moved on the operation panel to move a control displayed on the display screen, the touch panel device as a whole can be uniformly vibrated when the control tracks the movement of finger, giving the users the feeling that the control is moving in response to the movement of finger.

However, with the touch panel device of JP-2009-217816-A, the shape of the controls may not be recognized by touch, by which interfaces cannot be operated intuitively as they might be were the interfaces mechanical. Therefore, the sensation the user experiences when operating controls, displayed on a display screen by moving a finger on a operation panel, is quite different from the sensation experienced when mechanical interfaces are operated tactilely, with the result that the operability of the controls displayed on the display screen is not enhanced.

SUMMARY

In one aspect of the invention, a touch panel device is devised. The touch panel device includes an operation panel, an image display unit, a control generator, a vibrator, and a controller. The operation panel receives an operation input upon contact of a surface of the operation panel by a manipulator. The image display unit, disposed facing the operation panel, displays an image. The control generator generates an image of a control displayable on the image display unit. The vibrator vibrates the operation panel when a control is operated by the manipulator contacting a position on the operation panel corresponding to a position of the image of the control displayed on the image display unit. The controller causes the vibrator to provide a tactile sensation using vibration, corresponding to a shape of the control at a contact position between the manipulator and the control on the operation panel as the manipulator moves on the operation panel to move the control in the image display unit.

In another aspect of the invention, a method of controlling a touch panel device a touch panel device is devised. In the touch panel device, a manipulator is contacted at a position on an operation panel corresponding to a position of a control displayed on an image display unit to operate the control by the manipulator. The method comprising the steps of: detecting a contact condition between the manipulator and the operation panel; determining whether the manipulator is positioned at a position corresponding to the control on the operation panel; and vibrating the operation panel using a vibrator to provide a tactile sensation using vibration, corresponding to a shape of the control at a contact position between the manipulator and the control on the operation panel as the manipulator moves on the operation panel to move the control in the image display unit.

In another aspect of the invention, a computer-readable medium storing a program comprising instructions that when executed by a computer of touch panel device causes the computer to execute a method of controlling a touch panel device is devised. In the touch panel device, a manipulator is contacted at a position on an operation panel corresponding to a control displayed on an image display unit to operate the control by the manipulator. The method comprising the steps of: detecting a contact condition between the manipulator and the operation panel; determining whether the manipulator is positioned at a position corresponding to the control on the operation panel; and vibrating the operation panel using a vibrator to provide a tactile sensation using vibration, corresponding to a shape of the control at a contact position between the manipulator and the control on the operation panel as the manipulator moves on the operation panel to move the control in the image display unit.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 shows one example configuration of touch panel device according to an example embodiment;

FIG. 2 shows another example configuration of touch panel device, using a pressure-sensitive touch sensor, according to an example embodiment;

FIG. 3 shows another example configuration of touch panel device, using a capacitance type sensor, according to an example embodiment;

FIG. 4 shows a model of beam;

FIG. 5 shows an example wave pattern continuously changing its node positions;

FIG. 6 shows a graph showing relation of target position $x_0$ and gain $\alpha$;

FIG. 7A shows a graph showing relation of beam position x and response displacement w(x) when phase difference $\phi=0$;

FIG. 7B shows another graph showing relation of beam position x and response displacement w(x) when phase difference $\phi=\pi$ [rad];

FIG. 8 shows an example configuration of mechanical slider;

FIG. 9 shows a flowchart of explaining a process of presenting tactile sensation;

FIG. 10 shows a positional relation of finger and slider knob;

FIG. 11 shows a schematic explanation when to update a position of slider knob;

FIG. 12A shows a graph showing relation of center position of finger and center position of slider knob when E' is set greater;

FIG. 12B shows a graph showing relation of center position of finger and center position of slider knob when E' is set smaller;

FIG. 13 shows a graph showing relation of target position $x_0$ and gain $\alpha$;

FIG. 14 shows a graph showing relation of a center position of finger and a center position of slider knob, in which a feeling of absorption to scale set in a sliding direction is provided;

FIG. 15 shows transition or shift patters of contact condition between a finger and a slider knob;

FIG. 16A shows positional relation of a finger and a mechanical slider knob;

FIG. 16B shows an example vibration distribution pattern corresponding to a shape of slider knob;

FIG. 17 shows one example positional relation of finger and a slider knob, and an example of vibration distribution;

FIG. 18 shows another example positional relation of a finger and a slider knob, and another example of vibration distribution;

FIG. 19 shows another example positional relation of a finger and a slider knob, and another example of vibration distribution;

FIG. 20 shows another example positional relation of a finger and a slider knob, and another example of vibration distribution;

FIG. 21 shows another example positional relation of a finger and a slider knob, and another example of vibration distribution;

FIG. 22 shows another example positional relation of a finger and a slider knob, and another example of vibration distribution;

FIG. 23 shows an example of mechanical dial;

FIG. 24 shows a plan view of jog dial formed of a concaved portion as a dial knob;

FIG. 25 shows an example positional relation of a finger and a dial knob; and

FIG. 26 shows an example schematic configuration to present continuous tactile sensation between a concaved portion of dial knob and a finger using vibration, in which positional relation between a concaved portion of dial knob and a finger can be changed.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

It is clear that features discussed with reference to certain embodiments and/or Figures having a particular function or purpose can be used to replace features of other embodiments and/or depicted in other Figures having the same or a comparable function and/or purpose.

DETAILED DESCRIPTION OF EXEMPLARY EMBODIMENTS

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner. Referring now to the drawings, touch panel devices according to example embodiments are described hereinafter.

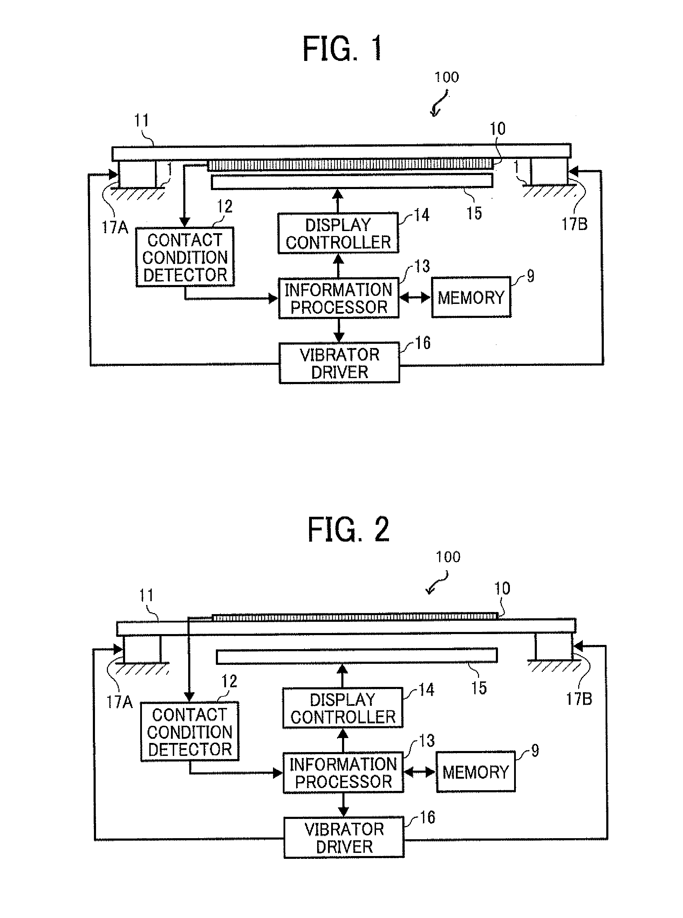

FIG. 1 shows a schematic cross-sectional view of a touch panel device 100 according to an example embodiment. The touch panel device 100 may include a baseboard 1, a display panel 15, a touch sensor 10, a cover panel 11, vibrators 17A and 17B, a contact condition detector 12, a display controller 14, a vibrator driver 16, an information processor 13, and a memory 9, for example.

The baseboard 1 is used as a board to mount the display panel 15, the touch sensor 10, the cover panel 11, and the vibrators 17A and 17B, and such baseboard 1 may, for example, be a printed circuit board (PCB) using an epoxy glass board, a composite glass board, or the like.

The display panel 15, mounted on the baseboard 1, is used as a display unit to display controls such as graphical user interface (GUI) parts generated by the display controller 14. As such, the display controller 14 may be used as control generator. In this disclosure, a control may be an interface part, such as slider, button or the like that can be displayed on a display screen, which may be called as GUI or GUI parts, for example, in general. The display panel 15, used to display GUI parts, may be, for example, a liquid crystal panel, an organic electro-luminescence (OEL) panel, or the like, but not limited thereto. Further, GUI parts may be displayed on the display panel 15 with a given display style that can be recognized visually by users that shape of GUI parts have convex and/or concave portions.

The touch sensor 10 may be mounted on the display panel 15, and is used as a coordinate detector to detect coordinate of position that is pressed by an user. In an example embodiment, a membrane resistance type sensor may be used as the touch sensor 10, but the touch sensor 10 is not limited to a membrane resistance type sensor. For example, the touch sensor 10 may be a pressure-sensitive sensor, a capacitance sensor, an ultrasonic sensor, or an optical sensor, or the like.

A description is given to capacitance sensor. When a capacitance sensor is used as the touch sensor 10, a plurality of electrode arrays is arranged while facing a to-be-touched face via the cover panel 11. By sandwiching the cover panel 11, electrode arrays and a finger, used as dielectric, can configure a capacitor, and capacitance is generated between the electrode arrays and finger. In general, when a dielectric substance having a dielectric constant $\varepsilon$ exists between parallel-placed plate conductor having an area S, and distance d, capacitance C becomes $C = \varepsilon S/d$. Accordingly, a capacitance generated between each electrode of electrode arrays and finger changes depending on a distance from a finger to opposing each electrode of electrode arrays and an area of each electrode. Therefore, the closer the interval of each electrode of electrode arrays and finger, or when a finger is placed closer to the cover panel 11, capacitance becomes greater. Accordingly, by detecting a change of capacitance and using a detection result, coordinate of position that a finger contacts the cover panel 11 can be identified.

Further, when a pressure-sensitive sensor is used as the touch sensor 10, as shown in FIG. 2, the touch sensor 10 is disposed on one face of cover panel 11, and the display panel 15 is disposed on the other face of cover panel 11, in which the touch sensor 10 and the display panel 15 face each other via the cover panel 11. In such a configuration, even if the cover panel 11 is made of hard material such as glass, coordinate of position pressed by users or operators can be detected effectively.

A membrane resistance type sensor has an electrode sheet, in which a plurality of translucent electrodes is disposed with a constant interval in a matrix form. When an user presses a surface of the cover panel 11 with a finger, opposing electrodes contact each other, by which electricity flows, and resistance value changes in X direction and Y direction of electrode sheet depending on a contact position. Based on a change of resistance value, a voltage value, corresponding to the X direction and Y direction, that is output from the membrane resistance type sensor, changes. Based on such change of voltage value, coordinate of operation position pressed by an user can be identified.

The cover panel 11, used as operation panel or operation input device of the touch panel device 100, may be made of translucent substrate. As above described, when an user presses a surface of the cover panel 11, coordinate of operation position is detected by the touch sensor 10. As such, the surface of cover panel 11 is used as a face to input coordinate information to operate the touch panel device 100 according to an example embodiment. The cover panel 11 may, for example, be resin substrate such as acrylic resin or polycarbonate resin, or a glass substrate, but not limited thereto.

Each of vibrators 17A and 17B may be prepared as a packaged driving element or device, in which a plurality of thin plate of piezoelectric elements are stacked between electrode plates and housed in a resin housing. As shown in FIG. 1, each of the vibrators 17A and 17B may be sandwiched between the baseboard 1 and the cover panel 11, and the vibrators 17A and 17B may be disposed at both ends of the display panel 15 (or both ends of the touch sensor 10) as one pair. Each of the vibrators 17A and 17B may be prepared as a thin and long driving element having a length, which is substantially same to a length in one direction of the baseboard 1 and the cover panel 11, which may extend in a direction perpendicular to a sheet face of FIG. 1. When a given voltage is applied to the vibrators 17A and 17B, the vibrators 17A and 17B distort in a stacked direction and displace to generate vibration to the cover panel 11. As such, the vibrators 17A and 17B may be used as a vibration generator. Further, the vibrator 17 can be prepared by a piezoelectric element, a voice coil, a vibration motor, or the like, and the number of the vibrator 17 may be set to one or more, as required.

The contact condition detector 12 is a circuit to conduct signal processing to a voltage value, indicating coordinate of operation position and an output from the touch sensor 10. By conducting signal processing using the contact condition detector 12, voltage value indicating coordinate of operation position receives amplification processing, noise reduction processing, and digital conversion processing, and then output as digital voltage value. Because such signal processing is conducted, even if a voltage value output from the touch sensor 10 is too small, an operation position can be detected correctly.

Further, when a membrane resistance type sensor having plurality of translucent electrodes in a matrix pattern is used as the touch sensor 10 as above described, a contact area can be detected based on the number of electrodes that are set in contact condition by a pressing operation, and operation position (or contact position) can be computed correctly by computing a center position of contact face. Further, the contact condition detector 12 can detect changes of operation position and contact area over the time.

Further, the touch sensor 10 and the contact condition detector 12 may be used a pressing level detector to detect pressing level of operation input, conducted on a coordinate input face.

The contact condition detector 12 conducts the above-described signal processing to a voltage value indicating coordinate of operation position to output inputted-coordinate information, which indicates a position that an operation input is done, and area information, which indicates a contact area. The input coordinate information indicates coordinate of center position of area that an input operation is done, for example, and the area information indicates a size of contact area.

When an user applies a greater pressure, a contacting area of electrode sheet of the touch sensor 10, which is arranged at an opposing position, becomes greater, by which a resistance value in electrode sheet becomes smaller, and a voltage value, indicating area information, output from the contact condition detector 12, becomes smaller. On one hand, when an user applies a smaller pressure, the contact area of electrode sheet becomes smaller, by which a voltage value indicating area information becomes greater. A change of area information can be used as information for indicating a change of pressing level to the cover panel 11 by an user. The input coordinate information and area information are input to the information processor 13 as information indicating which content of operation is input by an user.

Based on the above described process, the contact condition detector 12 computes and determines a contact condition between a finger and the cover panel 11, pressure distribution in contact area of the finger and cover panel 11, coordinate of center of gravity, or the like based on signals from the touch sensor 10.

The display controller 14 is a circuit to drive each pixel in the display panel 15 to display a desired image on the display panel 15. For example, if a liquid crystal panel is driven by an active matrix drive system, the display controller 14 drives a thin film transistor (TFT) to drive each pixel based on image data and display coordinate data, input from the information processor 13. The display controller 14 converts image data, read out from the memory 9 using the information processor 13, to an analog voltage signal, and outputs the analog voltage signal to drive the display panel 15. With such a configuration, an image (or image pattern), corresponding to image data, can be displayed at a display position, corresponding to display coordinate data, on the display panel 15. Image data may be stored in the memory 9, and such image data may be, for example, data for generating image (or image pattern) of GUI parts used as controls and image (or image pattern) around GUI parts for the touch panel device 100. Further, display coordinate data is data to identify displaying position of image data on a coordinate system, and may be stored in the memory 9 by relating display coordinate data with image data.

The vibrator driver 16 is a circuit to output a drive voltage (or drive signal) to drive the vibrators 17A and 17B, and may use, for example, a function generator. Depending on drive pattern (or vibrator command signal, to be described later) input from the information processor 13, the vibrator driver 16 conducts modulation and/or amplification of voltage wave pattern of drive voltage used for driving the vibrators 17A and 17B. Such drive pattern is determined by frequency and/or amplitude of voltage wave pattern, and such frequency and amplitude of voltage wave pattern may be set by frequency data and amplitude data, read out from the memory 9 by the information processor 13, for example.

The information processor 13 may include, for example, a central processing unit (CPU), and is used as a processor device for controlling the touch panel device 100 according to an example embodiment as a whole.

In an example embodiment, when executing program stored in the memory 9 to provide certain services to an user, the information processor 13 can determine an operation content operated by an user based on input coordinate information and/or area information input from the contact condition detector 12, and data indicating types of GUI parts displayed on the display panel 15. Then, based on a determination result, given processing is executed, and image data to generate an image pattern required for processing is read out from the memory 9, and then the image pattern is displayed on the display panel 15 via the display controller 14.

The information processor 13 executes an application to provide given processing, and can receive input from an user through GUI parts. Further, based on a contact condition of finger and cover panel 11, and a current condition of GUI part, screen information for whole GUIs including a operation target GUI part can be generated, and a vibrator command signal used for forming a given vibration distribution pattern on the cover panel 11 is prepared.

If each of the vibrators 17A and 17B applies vibration applying power having a given amplitude level to the cover panel 11 with a sine wave signal, any one of gain, phase, and frequency of sine wave signal may be continuously changed to control a traveling wave or standing wave, and thereby amplitude distribution of vibration (or vibration profile) on the cover panel 11 can be changed continuously.

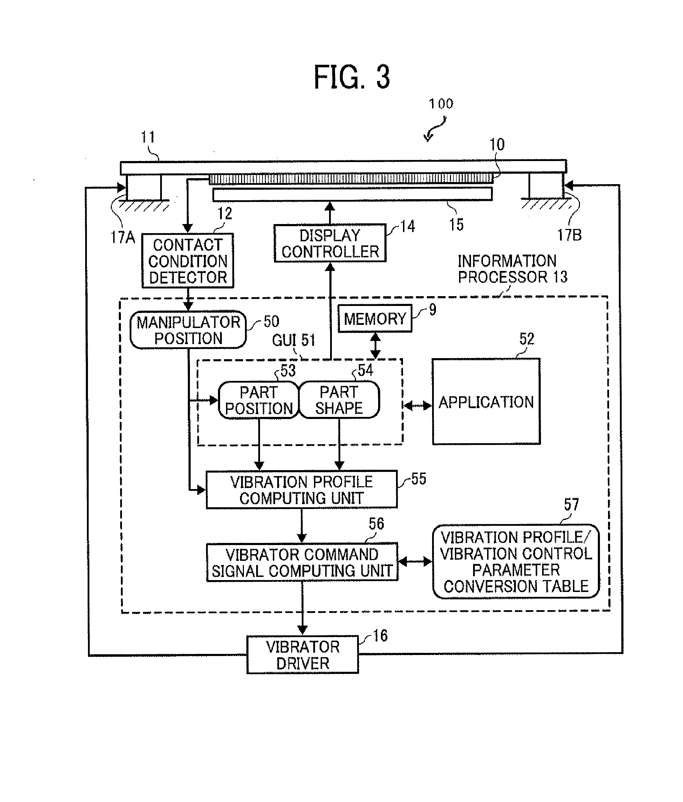

FIG. 3 shows another configuration of the touch panel device 100 using a capacitance type sensor. In general, in a touch panel application, a finger position of user (or manipulator position 50) is operated to move a part position 53 of each GUI part configuring GUI 51, and by moving the part position 53 with a movement of the manipulator position 50, application 52 can be executed by a CPU, in which a part shape 54 at the part position 53 may be displayed on the display panel 15 via the display controller 14. The part position 53 represents position of control, and a part shape 54 represents shape of control.

A vibration profile computing unit 55 computes a vibration profile based on the manipulator position 50, the part position 53, and the part shape 54 (e.g., convex/concave information). A vibrator command signal to generate a desired vibration profile can be computed by a vibrator command signal computing unit 56 using a vibration profile/ vibration control parameter conversion table 57 shown in FIG. 3.

In an example embodiment, image data, amplitude data, frequency data, and phase difference data may be inter-related in the touch panel device 100, and then stored in the memory 9. Then, when to read out image data from the memory 9 to display the image data as a certain image on the display panel 15, amplitude data, frequency data, and phase difference data inter-related with the image data stored in the memory 9 are read out from the memory 9. Then, the information processor 13 is used as a controller to execute given processing for vibrating the cover panel 11 by driving the vibrators 17A and 17B via the vibrator driver 16. The detail of processing for vibrating the cover panel 11 will be described later.

The memory 9 may be used as a memory to store various data such as program required for driving the touch panel device 100. In an example embodiment, the memory 9 stores, for example, programs to provide given services, image data, display coordinate data, and other data such as amplitude data, frequency data, and phase difference data, but not limited thereto.

Image data is data, which is used to display an image of GUI part and other image on the display panel 15. Further, display coordinate data is data, which is used to identify a position of displaying image, corresponding to each image data, on a coordinate system.

Amplitude data, frequency data, and phase difference data are data indicating vibration drive pattern to drive and vibrate the vibrators 17A and 17B via the vibrator driver 16. Such amplitude data, frequency data, and phase difference data are data indicating vibration drive pattern may be inter-related with image data and display coordinate data, and then stored in the memory 9.

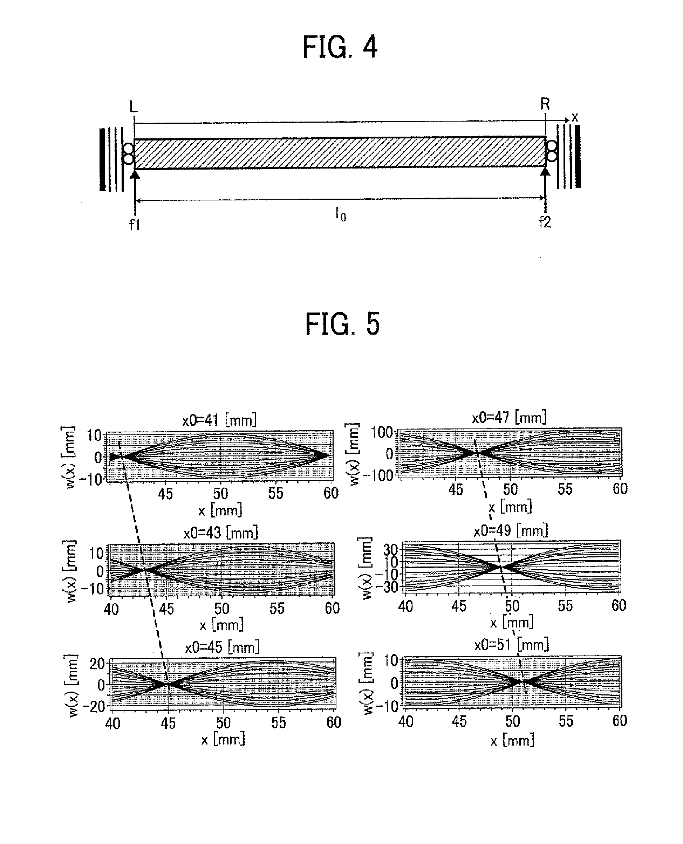

A description is now given to a method of generating a given vibration profile for GUI parts displayed on the display panel 15 on the cover panel 11 so that a tactile sensation can be presented to a manipulator, in which a beam concept shown in FIG. 4 is applied. In an example embodiment, vibration generated by the vibrator 17 may have a waveform of standing wave, which may change its peak and node positions continuously. Positions of peak and node can be changed based on phase difference of vibration applying power and/or changing a gain of wave. A method of continuously changing positions peak and node of standing wave is explained, hereinafter.

As shown in FIG. 4, each end of slide-ably supported beam having a length $l_0$ is applied with a point vibration such as shear force $f_1$ defined by following formula 1, and shear force $f_2$ defined by following formula 2.

$$F_1 = F_0 \sin (2\pi F t) \quad (formula\ 1)$$

$$F_2 = F_0\ \alpha\sin\ (2\pi F t + \phi) \quad (formula\ 2)$$

When compared formula 1 and formula 2, formula 2 includes two parameters: phase difference $\phi$, and gain $\alpha$. The objective function shown in formula 3 can be set to a minimum value by setting optimal solution for $(\alpha, \phi)$, and a method of controlling a vibration applying power for forming a node at a target position $x_0$ can be deduced. Such optimal setting can be computed by using a package of nonlinear programming, or the like. In formula 3, $w(x_0)$ is a displacement of beam at a position $x_0$ and cycle T is defined as T=1/F.

$$obj(\alpha, \phi : x_0) = \int_0^T w(x_0)^2 dt \qquad (formula\ 3)$$

As for a position "x" within a given area from a target node, displacement of beam "w(x)" is determined based on the computed $(\alpha,\phi)$.

Such a configuration may be applied to a model of beam, slide-ably supported at its both end (see FIG. 4). When the both ends (i.e., two end points) of beam are applied with vibration having a given frequency, by changing gain $\alpha$ and/or phase difference $\phi$ of vibration applying power, vibration profile shown in FIG. 5 can be set for standing wave, in which peak-and-node positions of wave are being continuously changed.

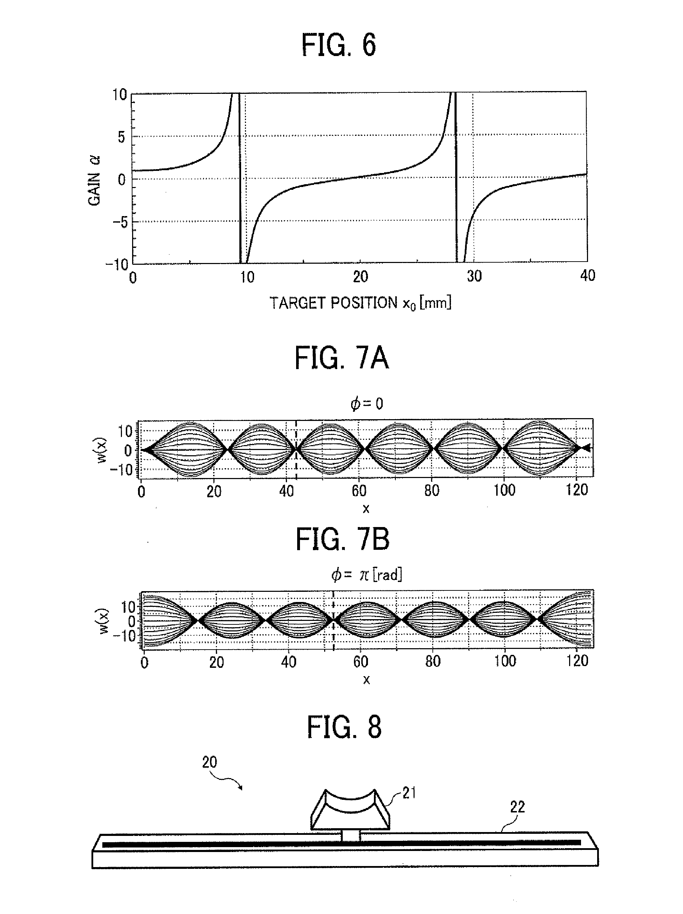

For example, when the response displacement w(x) of beam, generated by a wave pattern having a given frequency region, is examined using gain $\alpha$ as a vibration control parameter, values of gain $\alpha$ that can set a node at a target position "$x_0$" can be computed by the above-described method, and FIG. 6 shows one example relation of target position $x_0$ and the computed gain $\alpha$. As such, by changing the gain $\alpha$ continuously, a position of target position $x_0$ can be changed continuously.

In such a configuration, a frequency region may be a given frequency region that humans can perceive or sense as tactile sensation, such as several tens of hertz (Hz) to several hundreds of hertz (Hz). Further, when an amplitude modulation is used, stimulation such as tactile sensation can be given with a desired frequency region.

On one hand, when vibration is applied at a given frequency while setting gain $\alpha$=1, and phase difference $\phi$ is used as a vibration control parameter, the response displacement w(x) at position "x" of beam can be plotted as shown in FIGs. 7A and 7B, for example. FIG. 7A shows one example case that sets the phase difference $\phi$=0, and FIG. 7B shows another example case that sets the phase difference $\phi = \pi$ [rad] . As such, by changing phase difference $\phi$, a node position can be changed for one-fourth (1/4) of wavelength or so, for example.

A description is now given to control method of the touch panel device 100, in which a GUI part of slider (called also as fader, seek bar) may be used for explanation as one example.

FIG. 8 shows an example of mechanical slider, which may be used as a base concept of GUI part. Such mechanical slider is a slide volume 20 or a linear encoder of straight-line type, in which a slider knob 21 is used to place a finger thereon when to move the slider knob 21 on a slider rail 22. The slide volume 20 may be a straight-line type, for example. When a position of the slider knob 21 is moved along the slider rail 22, a resistance value can be changed, and such resistance value is read and used to continuously change parameter of a to-be-operated part or device. A sliding direction of the slider knob 21 can be set to any direction such as vertical direction, horizontal direction, or the like. Further, the slider knob 21 may be shaped in various forms that a finger can hold the slider knob 21 easily. For example, the slider knob 21 may have a concave portion or convex portion, but not limited thereto. The slider knob 21, which is an object to be operated, may have a concave portion, and the slider knob 21 can be moved in the horizontal direction by moving a finger placed on the concave portion. In an example embodiment, tactile sensation can be presented to a finger, operating a given part such as GUI part on a flat touch panel, as similar to when a finger is operating a mechanical slider such as slider knob 21.

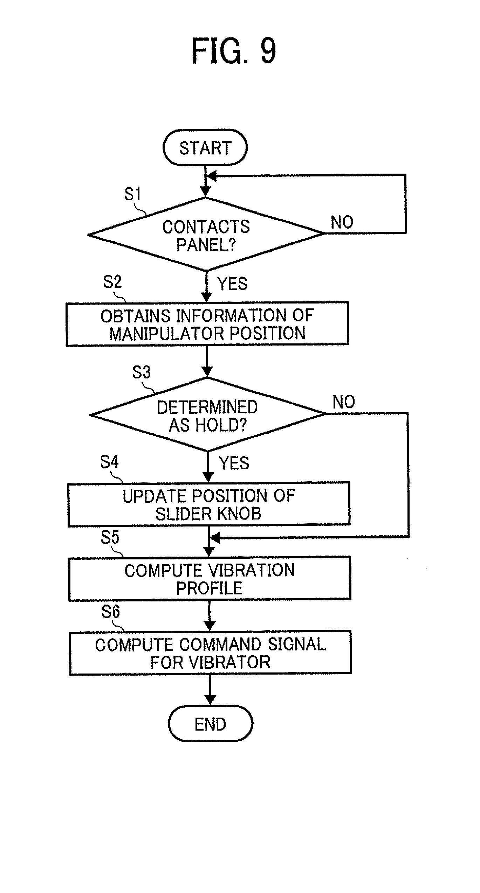

FIG. 9 shows a flowchart of explaining a process of presenting tactile sensation. At step S1, the contact condition detector 12 determines whether a finger contacts the cover panel 11 based on a signal obtained from the touch sensor 10.

At step S2, based on a signal obtained from the touch sensor 10, the contact condition detector 12 obtains information of finger position on the cover panel 11, by which a coordinate corresponding to the center of gravity of contact area, set by a finger and the cover panel 11, is obtained as finger center position "Xf."

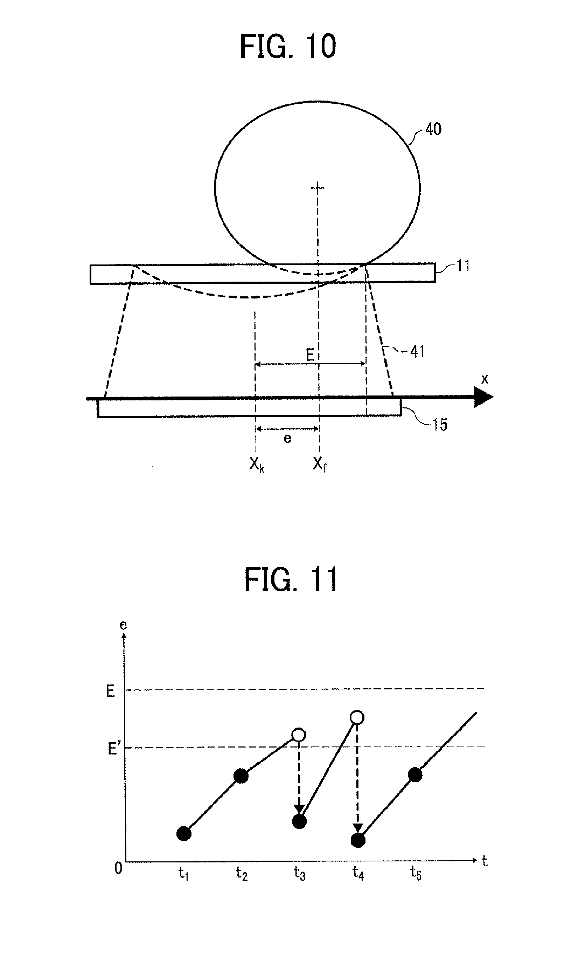

FIG. 10 shows a positional relation of a finger 40 contacted on the cover panel 11, and the slider knob 41 displayed on the display panel 15. For the simplicity of explanation, a position of the finger 40 and a position of the slider knob 41 are considered in one-dimensional scheme, which is a sliding direction of the slider knob 41 (i.e., x-axis direction shown in FIG. 10). In FIG. 10, a view of the finger 40 is a cross-sectional view of finger viewed from a fingertip, and a view of the slider knob 41 is a side view of the slider knob 41, and the slider knob 41 slides in the x-axis direction. In FIG. 10, to clearly show a positional relation of the finger 40 contacted on the cover panel 11 and the slider knob 41 displayed on the display panel 15, the slider knob 41 is expressed by a dotted line, expressing with a virtual three-dimensional shape, which may correspond to a mechanical slider. It should be noted that the slider knob 41 is not displayed as a stereo image on display panel 15, such as actually projecting from a surface of the display panel 15, but only displayed on the display panel 15.

At step S3, the center position Xk of the slider knob 41 is retained as a property of the slider knob 41, used as a GUI part, in the memory 9, and the information processor 13 obtains information of center position Xk of the slider knob 41. As defined by following formula 4, a difference between the center position Xk of the slider knob 41 and the center position Xf of the finger 40 is defined as absolute value "e," and a length (or width) from the center position Xk of the slider knob 41 to an edge of the slider knob 41 is set as "E" as shown in FIG. 10. When a relation of following formula 5 is satisfied, the information processor 13 can determine that the finger 40 is holding the slider knob 41.

$$e = \left| Xk - Xf \right| \quad \text{(formula 4)}$$

$$e < E \quad \text{(formula 5)}$$

At step S4, as for E' satisfying a relation defined by following formula 6, the center position Xk of the slider knob 41 is updated so that a relation of following formula 7 can be satisfied.

$$0 \leq E' < E \quad \text{(formula 6)}$$

$$e \leq E' \quad \text{(formula 7)}$$

A description is now given to updating of the center position Xk of the slider knob 41 with reference to FIG. 11, in which the vertical axis represents the absolute value "e" indicating difference between the center position Xk of the slider knob 41 and the center position Xf of the finger 40, and the horizontal axis represents time t.

If the absolute value "e" indicating a difference between the center position Xk of the slider knob 41 and the center position Xf of the finger 40 exceeds E' (see white circle) at time t3 and time t4, the center position Xk of the slider knob 41 is updated (see an arrow of dotted line) to satisfy formula 7. With such a configuration, by maintaining a distance difference (or deviation distance) between a position of the finger 40 and a position of the slider knob 41 at a given absolute value E' or less, the slider knob 41 can track a movement of the finger 40. By setting a given value E' and a given updating length (or width) for the center position Xk of the slider knob 41, an user can receive a virtual touch feeling when the finger 40 operates and slides the slider knob 41. For example, a virtual friction feeling, a virtual texture feeling, a virtual inertia feeling, or a virtual adsorption (or snapping) feeling effect that a finger is adsorbed (or snapped) to a scale disposed in a sliding direction, can be generated and presented.

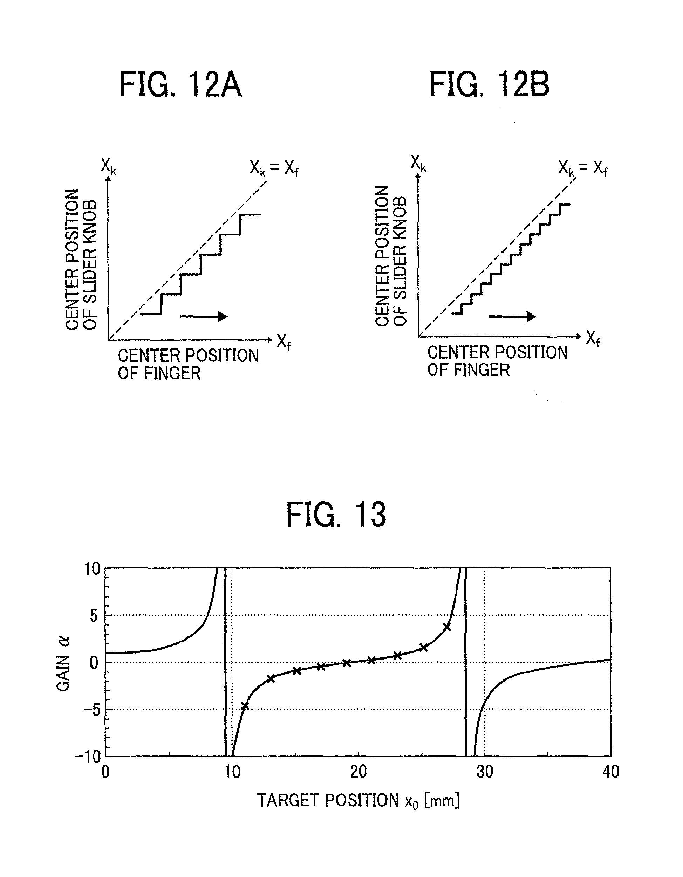

For example, when E' is set to a greater value, a movement of the center position Xk of the slider knob 41 changes with a greater step along the time line as the center position Xf of the finger 40 changes its position as shown in FIG. 12A. On one hand, when E' is set to a smaller value, a movement of the center position Xk of the slider knob 41 changes with a smaller step along the time line as the center position Xf of the finger 40 changes its position as shown in FIG, 12B. As such, by changing a value of E', a virtual touch feeling such as friction feeling (or stick slip feeling), generate-able when operating slider knob, can be changed.

A step S5, the information processor 13 computes a vibration profile that can present a tactile sensation corresponding to a shape of slider knob 41 using the center position Xk of the slider knob 41 as a reference position.

At step S6, based on the vibration profile computed at step S5, the information processor 13 computes a command signal to be used to generate a given vibration pattern at the vibrator 17. Then, the information processor 13 outputs such computed command signal to the vibrator driver 16, and the vibrator driver 16 vibrates the vibrators 17A and 17B. With such a configuration, a shape of the slider knob 41 can be presented on the cover panel 11 with a given tactile sensation, in which the shape of the slider knob 41 may be specified using the reference position of the center position Xk of the slider knob 41.

Vibration parameter such as gain $\alpha$, phase difference $\phi$, or the like, which may be set in a manner to generate desired vibration profile, may be stored in the memory 9 as coefficient of formula, coefficient of approximation formula of such formula, or as discrete data, which is set as a table format. For example, using a table format shown as Table 1, the vibration parameter can be interpolated for the center position Xk of the slider knob 41 as shown in FIG. 13, by which a command signal used to vibrate a vibrator can be computed, and vibration pattern according to computed command signal can be smoothly generated.

Table 1

| Position of vibration profile (mm) | Vibration parameter |
|---|---|
| 11 | -4.68 |
| 13 | -1.78 |
| 15 | -0.91 |
| 17 | -0.43 |
| 19 | -0.06 |
| 21 | 0.29 |
| 23 | 0.73 |
| 25 | 1.47 |
| 27 | 3.82 |

The control process such as from steps S1 to S6 shown in FIG. 9 is repeatedly and continuously conducted when the finger 40 moves on the cover panel 11 to operate the slider knob 41, in which the shape of slider knob 41 can be presented with a tactile sensation by using vibration at a contact position between the finger 40 and the cover panel 11 while the slider knob 41 tracks a movement of the finger 40.

In the control process shown in FIG. 9, when the absolute value "e" indicating a difference between the center position Xk of the slider knob 41 and the center position Xf of the finger 40 exceeds a given value E', the center position Xk of the slider knob 41 may be updated so that the slider knob 41 can track a movement of the finger 40 while the slider knob 41 is moving on the panel.

In addition to such control, another control can be devised for the slider knob 41. For example, when the center position Xf of the finger 40 is positioned at a given area on the cover panel 11, the slider knob 41 may be moved so that the center position Xk of the slider knob 41 can be adsorbed to a given portion in the given area.

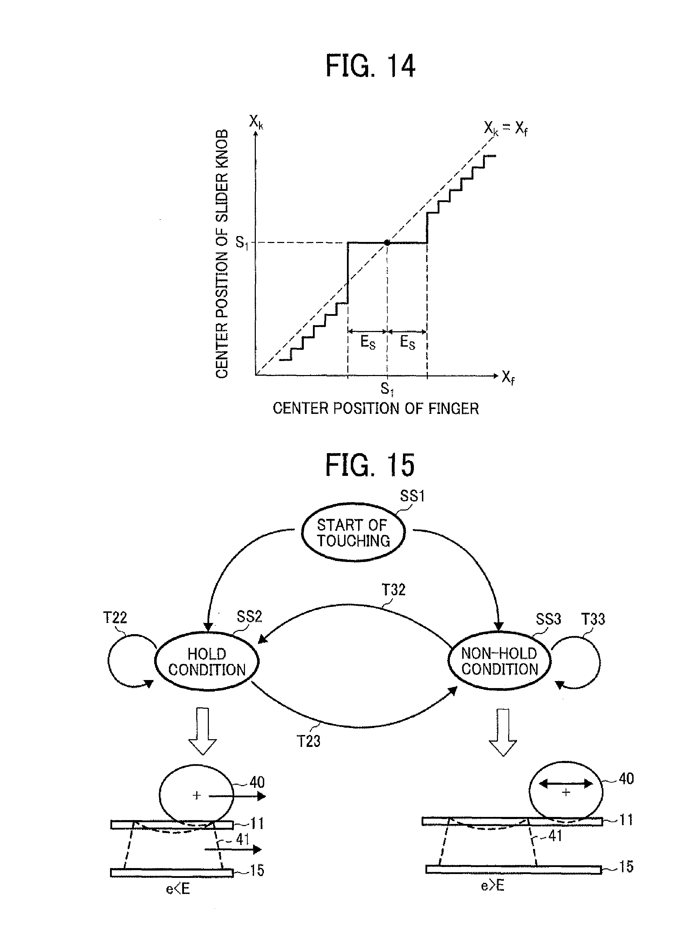

A description is now given to a method of generating an adsorption feeling on a scale, set in a sliding direction, with reference to FIG. 14, in which a position S1 is set as an adsorption position.

In addition to the above described updating process of the center position Xk of the slider knob 41, a process of following formula 8 using a given value Es may be applied, in which the center position Xk of the slider knob 41 can be adsorbed at the position S1 while tracking the center position Xf of the finger 40. As shown in FIG. 14, when the center position Xf of the finger 40 is positioned in an area, defined by Es before and after from the S1 position in the horizontal axis, the center position Xk of the slider knob 41 can be positioned at a S1 position in the vertical axis.

$$IF \; \left| Xf - S1 \right| < Es \; THEN \; Xk=S1 \; (formula \; 8)$$

If a plurality of scales are disposed, for example, adsorption positions may be disposed at positions S1, S2, ..., Si, ... with a given interval, and the above described updating condition can be checked using following formula 9.

$$\forall i \; IF \; \left| Xf - Si \right| < Es \; THEN \; Xk=Si \; (formula \; 9)$$

A description is now given to each example condition explained in a flowchart of FIG. 9 with reference to FIG. 15. The finger 40, distanced from the cover panel 11 at first, is moved toward a position of the slider knob 41 displayed on the display panel 15, and then the finger 40 contacts or touches an area surrounding the position of the slider knob 41 on the cover panel 11. Such contacted condition of the finger 40 is referred to a condition SS1.

When the finger 40 slides on the cover panel 11 from the condition SS1, a condition may transit or shift from the condition SS1 to another condition as shown in FIG. 15. When the condition shifts from the condition SS1 to a condition SS2, the slider knob 41 tracks a movement of the finger 40 while the finger 40 moving on a panel. When the condition shifts from the condition SS1 to a condition SS3, the slider knob 41 cannot track a movement of the finger 40 while the finger 40 moving on a panel, but the slider knob 41 is separated from the finger 40.

A description is given to positional relation of the finger 40 and the slider knob 41 under the condition SS2 and condition SS3 with reference to FIG. 15. A condition may change or shift depending on a hold determination process at step S3 in a flowchart of FIG. 9. Specifically, a condition may shift from condition SS2 to condition SS2 (T22); a condition may shift from condition SS2 to condition SS3 (T23); a condition may shift condition SS3 to condition SS3 (T33); and a condition may shift from condition SS3 to condition SS2 (T32) as shown in FIG. 15.

As for a typical touch panel device, when the slider knob 41 (used as GUI part) is operated by the finger 40, an user thinks that he or she is sliding the finger 40 on the cover panel 11 under the condition SS2, but the condition SS3 may occur actually under a given condition, then the slider knob 41 cannot track a sliding movement of the finger 40 effectively in the display panel 15, by which failure of sliding operation occurs frequently.

In an example embodiment, the shape of slider knob 41 on the cover panel 11 can be presented with tactile sensation using vibration, by which an user can intuitively recognize whether the slider knob 41 is tracking a movement of the finger 40 while moving the finger 40 on the cover panel 11. Further, because the shape of slider knob 41 displayed on the display panel 15 can be recognized by the finger 40 placed on the cover panel 11 in the above described configuration, an operation feeling of the slider knob 41 by the finger 40 can be set substantially closer to an operation feeling when a finger operates the mechanical slider knob 21 (see FIG. 8). Accordingly, an user can operate the slider knob 41 by the finger 40 with an operation feeling virtually same as an operation feeling that the finger are operating the mechanical slider knob 21, by which operability of slider knob 41 by the finger 40 can be enhanced.

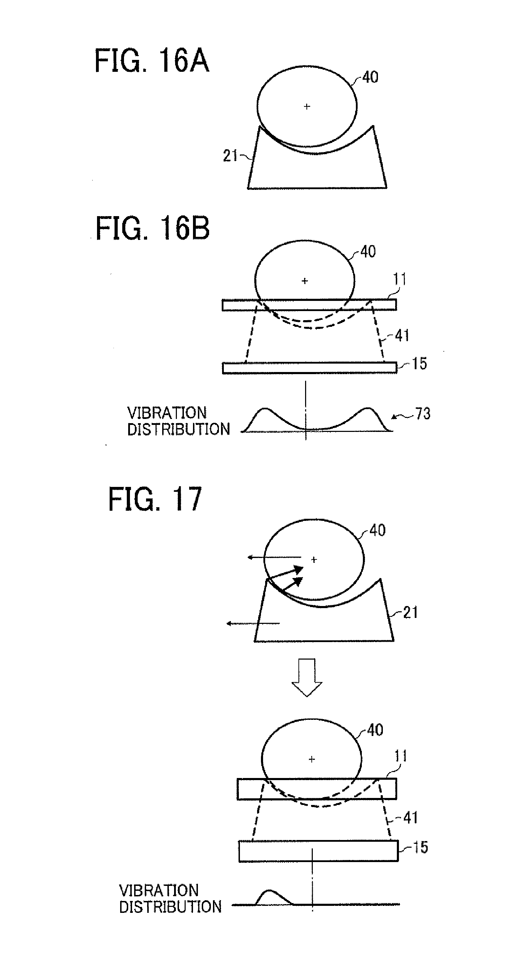

A description is given to how to set a vibration profile at step S5 in flowchart, shown in FIG. 9, with reference to FIGs. 16A/16B.

The finger 40 may contact the mechanical slider knob 21 as shown in FIG. 16A, and the finger 40 receives a reaction force from the mechanical slider knob 21, which may correspond to a shape of the slider knob 21. Accordingly, it is preferable if a vibration profile close to such actual reaction force can be generated and applied when operating the slider knob 41 by a finger, wherein such contacted condition and vibration profile on the display panel 15 are shown in FIG. 16B. For example, if a vibration distribution pattern is formed as shown in FIG. 16B by vibrating the cover panel 11 at given positions corresponding to the positions surrounding the slider knob 41 displayed on the display panel 15, an user can intuitively recognize the shape of slider knob 41 by touch that is virtually the same as when operating a mechanical slider knob with a finger. As a result, a contact condition between the finger 40 and the slider knob 41 can be easily sensed, thus enhancing operability of the slider knob 41 displayed on the display panel. Such vibration distribution pattern is plotted using the horizontal axis indicating positions, and the vertical axis indicating each absolute maximum value of vibration at each position that the finger 40 operates the slider knob 41 at a given time.

FIG. 16B shows a vibration pattern that the finger 40 can get a touch-feeling substantially exact to the shape of slider knob 41, in which different level of vibration is distributed at each position along a given direction. Such vibration pattern may be also referred to as vibration distribution pattern. However, it is not required to generate such vibration profile or vibration distribution pattern shown in FIG. 16B, but other vibration profile can be used.

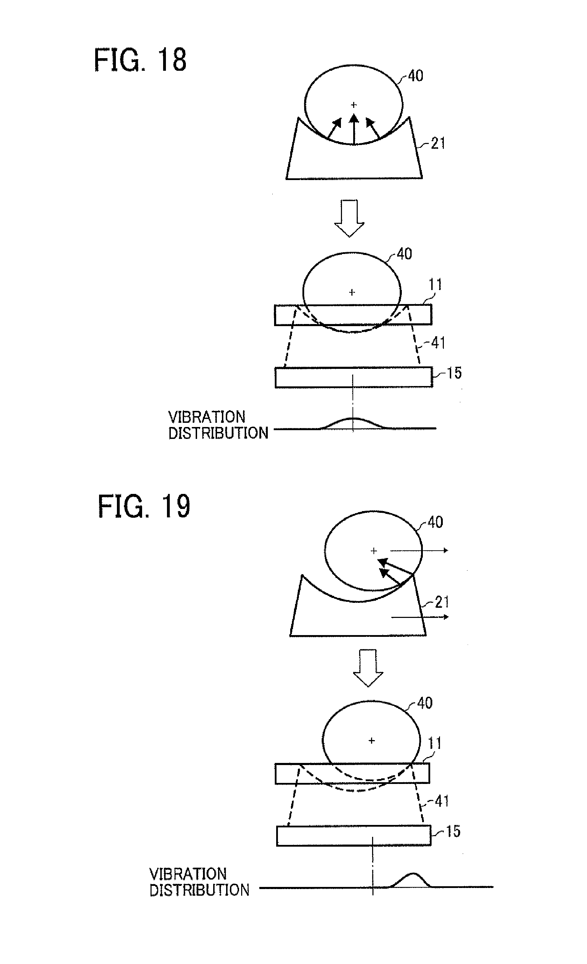

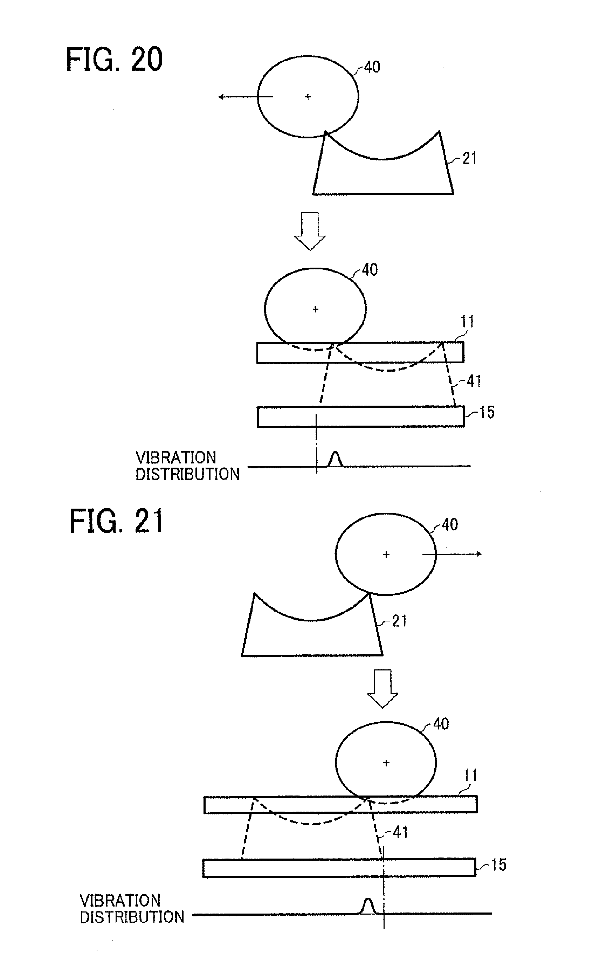

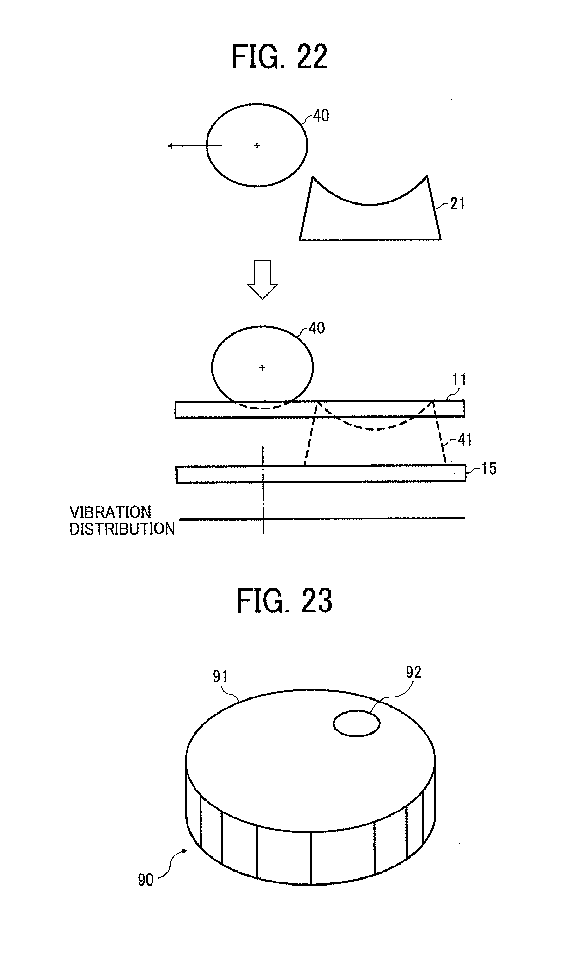

FIGs. 17 to 22 show other examples of vibration distribution patterns in view of positional relation of the finger 40 and slider knob 41. FIGs. 17, 18, and 19 show example vibration distribution patterns when the slider knob 41 is in a hold condition by the finger 40 and a contact face between the finger 40 and the slider knob 41 is relatively wider. FIGs. 20 and 21 show example cases that the finger 40 shifts from a hold condition (i.e., finger 40 is holding the slider knob 41) to a non-hold condition (i.e., finger 40 does not hold the slider knob 41). When the finger 40 does not hold the slider knob 41 but the finger 40 and the slider knob 41 may contact at one point (i.e., point contact) such as edge portion of the slider knob 41 as shown in FIGs. 20 and 21, vibration distribution patterns having a narrower width may be generated at the point contact position. Further, FIG. 22 shows a non-hold condition that the finger 40 does not hold the slider knob 41 anymore, in which no vibration distribution patterns is generated.

Further, in FIGs. 17 to 22, based on information of operation position (i.e., position of finger 40 on the cover panel 11) output from the touch sensor 10, and information of position of slider knob 41 on the display panel 15 detectable by the information processor 13, the information processor 13 can compute a positional relation of the finger 40 and the slider knob 41, and a vibration profile that can generate a vibration distribution pattern, which can present a part of the shape of slider knob 41 only at a contact portion of the finger 40 and the slider knob 41 may be generated.

In the above described example embodiment, an operation of GUI part provided for the touch panel device 100 is explained using the slider knob 41 displayed on the display panel 15. However, GUI part is not limited such slider knob, but other parts such as for example a dial that can change parameter continuously by a rotating operation can be used. Hereinafter, such a dial according to an example embodiment is explained. At first, a jog dial 90 used as a mechanical dial is explained with reference to FIG. 23. Such jog dial may be typically used as an editing process of audio/voice data and/or image data along a timeline such as for example moving/searching of data in a playback operation, but not limited such purpose.

Specifically, the jog dial 90 includes a dial knob 91, and a concaved portion 92 formed on the dial knob 91 to fit or insert the finger 40 therein. By operating the dial knob 91 while inserting the finger 40 in the concave portion 92, the dial knob 91 can be rotated or stopped at a desired position efficiently.

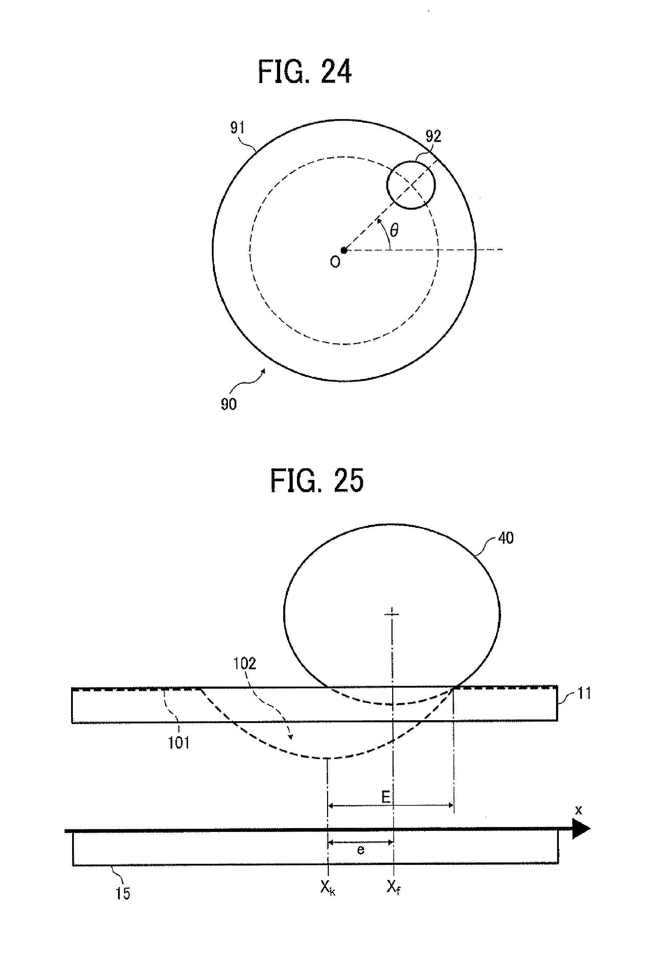

FIG. 24 shows a top view of the jog dial 90 of FIG. 23, in which a top face of the dial knob 91 is formed with the concave portion 92. A circle motion of the concave portion 92 of the dial knob 91, which rotates about the center point of the dial knob 91 (i.e., point O), can be assumed as a simple harmonic oscillation, which can be obtained by orthogonal projection of the dial knob 91. Accordingly, a rotation angle θ of concave portion 92 of dial knob 91 can be converted to a distance "x" in the x-axis direction of one-dimensional system. Therefore, a movement of concave portion 102 of dial knob 101 displayed on the display panel 15 is also assumed as a motion in one-dimensional system as shown in FIG. 25.

With such a configuration, the above-described similar configuration and/or method for slide-operation of the slider knob 41 by the finger 40, displayed on the display panel 15 as a GUI part, can be similarly applied to the dial knob 101, displayed on the display panel 15 as GUI part, in which a concave shape of concave portion 102 of the dial knob 101 can be presented on the cover panel 11 as a tactile sensation using vibration, by which an user can intuitively recognize the concave portion 102 of the dial knob 101 by touch that is virtually the same as when operating a mechanical dial knob with a finger. As a result, a contact condition between the finger 40 and the concave portion 102 can be easily sensed, thus enhancing operability of the dial knob 101 displayed on the display panel 15.

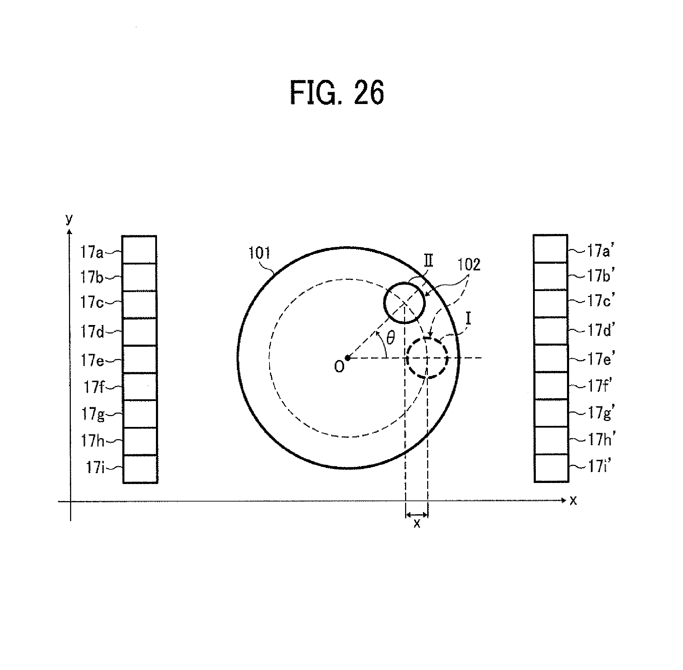

Further, when the dial knob 101 rotates about the point O, the concave portion 102 moves from a predetermined reference position with a rotation angle θ, and then combination patterns of vibrators 17 to vibrate the cover panel 11 can be changed. For example, in FIG. 26, when the concave portion 102 is set at the position I, which is the reference position of concave portion 102, the vibrator 17e and the vibrator 17e', which are disposed along the same one line parallel to the x-axis, are driven to vibrate the cover panel 11. Then, when the concaved portion 10 moves from the reference position for a rotation angle θ to position II, and the concave portion 102 is positioned at the position II, the vibrator 17c and the vibrator 17c', which are disposed along the same one line parallel to the x-axis, are driven to vibrate the cover panel 11. Further, in the middle of movement of the concave portion 102 from the reference position I to the position II, the vibrator 17d and the vibrator 17d', which are disposed along the same one line parallel to the x-axis, are driven to vibrate the cover panel 11. As such, when the concave portion 102 is moved from the position I to position II by rotating the dial knob 101 using a motion of the finger 40, combination patterns of vibrators 17 to vibrate the cover panel 11 can be switched in an order of vibrators 17e/17e', vibrators 17d/17d', and vibrators 17c/17c' so that the cover panel 11 is vibrated continuously while the dial knob 101 tracking a motion of the finger 40. As a result, a positional relation of the concave portion 102 of the dial knob 101 and the finger 40 can be presented continuously using vibration.

Further, combination patterns of vibrators 17 are not limited to the vibrators 17 disposed along the same one line parallel to the x-axis. For example, when the concave portion 102 is positioned at the position II, the vibrator 17a and the vibrator 17d', which is on a line passing the position II, may be used to vibrate the cover panel 11 so that a shape of concave portion 102 can be presented with tactile sensation by using vibration.

The above described example embodiment may include following aspects. The touch panel device 100 includes the cover panel 11, the display panel 15, and the display controller 14, for example. The cover panel 11 is used as an operation panel that receives an operation input from a manipulator such as finger 40 when the finger 40 contacts a surface of cover panel 11. The display panel 15, which may be disposed at a position facing the cover panel 11, is used as an image display unit to display image. The display controller 14 is used as a control generator that generates controls such as slider knob 41, dial knob 101, or the like, to be displayed as image on the display panel 15.

In the touch panel device 100, the finger 40 is contacted to a position on the cover panel 11 corresponding to a position of control displayed on the display panel 15 to operate the control using the finger 40. Such touch panel device 100 may include the vibrator 17, and the information processor 13. The vibrator 17 is used as a vibrator to vibrate the cover panel 11. The information processor 13 is used as a controller to control vibration of the cover panel 11 caused by the vibrator 17. Specifically, when the finger 40 is moved on the cover panel 11 to move a control on the display panel 15 while the control tracking a movement of the finger 40, tactile sensation corresponding to the shape of control can be presented at a contact position between the finger 40 and the cover panel 11 by using vibration generated by the vibrator 17 on the cover panel 11. As such, when the finger 40 is moved on the cover panel 11 to operate a movement of control in a display panel, the control can track a movement of the finger 40, and a shape of control can be presented at a contact position between the finger 40 and the control on the cover panel 11 with tactile sensation such as using vibration. With such a configuration, an user can intuitively recognize whether the finger 40 contacts an control and whether an control is moving by tracking a movement of the finger 40, and further, an user can intuitively recognize whether the finger 40 does not contact an control and whether an control cannot track a movement of the finger 40. Accordingly, because operation of control can be intuitively recognized, operability of control by the finger 40 can be enhanced.

Further, in the above described example embodiment, the contact condition detector 12 is used as a contact condition detector to detect a contact condition between the cover panel 11 and the finger 40, and the information processor 13 is used as a vibration profile generator to generate various patterns for vibration profile having given amplitude distribution for vibration that can present a shape of control with tactile sensation based on a detection result of the contact condition detector 12.

The information processor 13 controls the vibrator 17 to vibrate the cover panel 11 using vibration profile patterns, and can change vibration profile patterns continuously for the control tracking a movement of the finger 40 on the cover panel 11. With such a configuration, an control can track a movement of the finger 40, and a shape of control at a contact position between the finger 40 and an control on the cover panel 11 can be presented with tactile sensation such as using vibration.

Further, in the above described example embodiment, the information processor 13 may be used as a control position detector and a vibration profile generator. As the control position detector, the information processor 13 detects a position of control on the display panel 15, and as the vibration profile generator, the information processor 13 prepares or generates various patterns for vibration profile having given amplitude distribution for vibration that can present a shape of control with tactile sensation based on a detection result of the contact condition detector 12. As such, the information processor 13 controls the vibrator 17 to vibrate the cover panel 11 using vibration profile patterns, and can change vibration profile patterns continuously for the control tracking a movement of the finger 40 on the cover panel 11. With such a configuration, a control can track a movement of the finger 40, and a shape of control at a contact position between the finger 40 and control on the cover panel 11 can be presented with tactile sensation such as using vibration.

Further, in the above described example embodiment, the touch sensor 10 is used as a manipulator position detector to detect a position of finger 40 on the cover panel 11, and the information processor 13 can generate various patterns for vibration based on a detection result of the manipulator position detector.

Further, in the above described example embodiment, because various patterns for vibration having amplitude distribution of vibration corresponding to a convex/concave shape of control can be presented, an user can intuitively recognize whether an control is correctly hold and moves, or an control cannot be hold, by which operability of controls can be enhanced.

Further, in the above described example embodiment, the vibrator 17 can vibrate the cover panel 11 using a standing wave having peak and node positions. In such a configuration, the information processor 13 can generate vibration profile patterns that change positions of peak and node of standing wave continuously while tracking a movement of the finger 40 on the cover panel 11. Accordingly, tactile sensation corresponding to a shape of control can be presented at a contact position between the finger 40 and the cover panel 11 using vibration while the control tracking a movement of the finger 40 on the cover panel 1.

Further, in the above described example embodiment, the slider knob 41 is used as slider part or member that can move slidably on the display panel 15. When the slider knob 41 is moved on the cover panel 11 using the finger 40 to move the slider knob 41 in the display panel 15, tactile sensation corresponding to a shape of slider knob 41 can be presented at a contact position between the finger 40 and the cover panel 11 using vibration while the slider knob 41 tracking a movement of the finger 40 on the cover panel 1. With such a configuration, an user can intuitively recognize whether the finger 40 contacts the slider knob 41 and whether the slider knob 41 is moving by tracking a movement of the finger 40, and further, an user can intuitively recognize whether the finger 40 does not contact the slider knob 41 and whether the slider knob 41 cannot track a movement of the finger 40. Accordingly, operation of the slider knob 41 can be intuitively recognized, and thereby operability of the slider knob 41 by the finger 40 can be enhanced.

Further, in the example embodiment, the dial knob 101 is used as a dial part or member that can rotate on at least in one direction such as clockwise direction and/or counter-clockwise direction in the display panel 15. When the dial knob 101 is rotated on the cover panel 11 using the finger 40 on the display panel 15, tactile sensation corresponding to a shape of dial knob 101 can be presented at a contact position between the finger 40 and the cover panel 11 using vibration while the dial knob 101 tracking a movement of the finger 40 on the cover panel 1. With such a configuration, an user can intuitively recognize whether the finger 40 contacts the dial knob 101 and whether the dial knob 101 is rotating while tracking a movement of the finger 40, and further, an user can intuitively recognize whether the finger 40 does not contact the dial knob 101 and whether the dial knob 101 cannot track a movement of the finger 40 when the dial knob 101 is rotated. Accordingly, because operation of the dial knob 101 can be intuitively recognized, operability of the dial knob 101 by the finger 40 can be enhanced.

As above described, in the present invention, when a control is operated by moving a manipulator on an operation panel, the operation panel can be vibrated by a vibrator controlled by a controller, and tactile sensation corresponding to a shape of control can be presented at a contact position between the manipulator and the operation panel along with a movement of manipulator such as finger. With such a configuration, tactile sensation corresponding to a shape of control can be presented at the contact position, by which an user can intuitively recognize whether the manipulator contacts and holds the control and whether the control is moving while tracking a movement of the manipulator.

Further, because a shape of control displayed on an image display unit can be recognized on an operation panel by the manipulator, an operation feeling of control operated by the manipulator becomes close to an operation feeling when a manipulator operates a mechanical interface. Accordingly, an user can operate an control using the manipulator with an operation feeling that the manipulator is operating a mechanical interface, by which operability of controls by a manipulator can be enhanced.

As above described, in the present invention, users can recognize whether a control tracks a movement (or motion) of manipulator, and operability of controls by a manipulator can be enhanced, and a touch panel device and a control method of touch panel device employing the above described preferable embodiment can be devised.

Further, the above-described process shown in each drawing can be prepared as a computer-readable program, which can be executed by a CPU of information processing apparatus. Such a program can be stored in a storage medium such as a semiconductor storage, an optical storage, a magnetic storage, or the like. Further, such a program and storage medium can be used in system, which may be different from the above-described example embodiments, and by executing the program using a CPU of system, an effect similar to the above-described example embodiments can be devised. As such, in the above-described example embodiments, a computer can be used with a computer-readable program to control functional units used for an information processing system or apparatus. For example, a particular computer may control the information processing apparatus using a computer-readable program, which can execute the above-described processes or steps. Further, in the above-described exemplary embodiments, a storage device (or recording medium), which can store computer-readable program, may be a flexible disk, a CD-ROM (compact disk read only memory), DVD (digital versatile disk), a memory card, a memory chip, or the like, but not limited these. Further, a computer-readable program can be downloaded to a particular computer (e.g., personal computer) via a network, or a computer-readable program can be installed to a particular computer from the above-mentioned storage device, by which the particular computer may be used for the information processing system or apparatus according to exemplary embodiments, for example.

Numerous additional modifications and variations are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

**Claims**

1. A touch panel device, comprising:

an operation panel to receive an operation input upon contact of a surface of the operation panel by a manipulator or operator;
an image display unit , disposed facing the operation panel, to display an image;
a control generator configured to generate an image of a control displayable on the image display unit;
a vibrator configured to vibrate the operation panel when a control is operated by the manipulator or operator contacting a position on the operation panel corresponding to a position of the image of the control displayed on the image display unit; and
a controller configured to cause the vibrator to provide a tactile sensation using vibration, corresponding to a shape of the control at a contact position between the manipulator and the control on the operation panel as the manipulator moves on the operation panel to move the control in the image display unit.

2. The touch panel device of claim 1, further comprising:

a contact condition detector to detect a contact condition between the operation panel and the manipulator; and
a vibration profile generator to prepare a vibration profile based on a detection result of the contact condition detector, the vibration profile including an amplitude distribution for vibration to represent the shape of the control as a tactile sensation,
wherein the controller controls the vibrator to vibrate the operation panel based on the vibration profile and changes a vibration level of the vibration profile continuously while tracking a movement of the manipulator on the operation input panel.

3. The touch panel device of one of claims 1 or 2, further comprising:

a control position detector to detect a position of a control on the image display unit; and
a vibration profile generator to prepare a vibration profile based on a detection result of the control position detector, the vibration profile including an amplitude distribution for vibration to represent the shape of the control as a tactile sensation,
wherein the controller controls the vibrator to vibrate the operation panel based on the vibration profile and changes a vibration level of the vibration profile continuously while tracking a movement of the manipulator on the operation panel.

4. The touch panel device of claim 2, further comprising a manipulator position detector to detect a position of the manipulator on the operation panel,
wherein the vibration profile generator prepares a vibration profile based on a detection result of the manipulator position detector.

5. The touch panel device of one of claims 2 or 4, wherein the vibration profile includes an amplitude distribution for vibration capable of presenting a convex shape and concave shape of the control.

6. The touch panel device of claim 2, wherein the vibrator vibrates the operation panel using a standing wave having a peak and a node, and the vibration profile generator prepares a vibration profile for the standing wave having a peak and a node that changes positions of the peak and the node continuously while tracking the movement of the manipulator on the operation panel.

7. The touch panel device of one of claims 1 to 6, wherein the control is a slider, slidably moveable on the image display unit.

8. The touch panel device of one of claims 1 to 6, wherein the control is a dial, capable of rotating in at least one of a clockwise direction and a counter-clockwise direction on the image display unit.

9. A method of controlling a touch panel device in which a manipulator is contacted at a position on an operation panel corresponding to a position of a control displayed on an image display unit to operate the control by the manipulator, the method comprising the steps of:

detecting a contact condition between the manipulator and the operation panel;
determining whether the manipulator is positioned at a position corresponding to the control on the operation panel; and
vibrating the operation panel using a vibrator to provide a tactile sensation using vibration, corresponding to a shape of the control at a contact position between the manipulator and the control on the operation panel as the manipulator moves on the operation panel to move the control in the image display unit.

10. A computer-readable medium storing a program comprising instructions that if executed by a computer connected to a touch panel device causes the computer to execute a method of controlling the touch panel device, in which a manipulator is contacted at a position on an operation panel corresponding to a control displayed on an image display unit to operate the control by the manipulator, the method comprising the steps set forth in claim 9.

# FIG. 1

100

11

10

15

12

17A

CONTACT
CONDITION
DETECTOR

DISPLAY
CONTROLLER

14

INFORMATION
PROCESSOR

13

MEMORY

9

17B

VIBRATOR
DRIVER

16

# FIG. 2

100

11

10

15

12

17A

CONTACT
CONDITION
DETECTOR

DISPLAY
CONTROLLER

14

INFORMATION
PROCESSOR

13

MEMORY

9

17B

VIBRATOR
DRIVER

16

# FIG. 3

# FIG. 4

# FIG. 5

# FIG. 6

# FIG. 7A

$\phi = 0$

# FIG. 7B

$\phi = \pi$ [rad]

# FIG. 8

# FIG. 9

START

S1 CONTACTS PANEL? — NO

↓ YES

S2 OBTAINS INFORMATION OF MANIPULATOR POSITION

S3 DETERMINED AS HOLD? — NO

↓ YES

S4 UPDATE POSITION OF SLIDER KNOB

S5 COMPUTE VIBRATION PROFILE

S6 COMPUTE COMMAND SIGNAL FOR VIBRATOR

END

# FIG. 10

# FIG. 11

# FIG. 12A

CENTER POSITION
OF SLIDER KNOB

$X_k$

$X_k = X_f$

$X_f$

CENTER POSITION
OF FINGER

# FIG. 12B

CENTER POSITION
OF SLIDER KNOB

$X_k$

$X_k = X_f$

$X_f$

CENTER POSITION
OF FINGER

# FIG. 13

GAIN $\alpha$

TARGET POSITION $x_0$ [mm]

# FIG. 14

# FIG. 15

FIG. 16A

FIG. 16B

VIBRATION
DISTRIBUTION

FIG. 17

VIBRATION
DISTRIBUTION

FIG. 18

VIBRATION
DISTRIBUTION

FIG. 19

VIBRATION
DISTRIBUTION

FIG. 20

VIBRATION
DISTRIBUTION

FIG. 21

VIBRATION
DISTRIBUTION

# FIG. 22

VIBRATION
DISTRIBUTION

# FIG. 23

# FIG. 24

# FIG. 25

# FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009217816 A